# EUROPÄISCHE PATENTSCHRIFT

(11) **EP 0 918 658 B1**
(45) Veröffentlichungstag und Bekanntmachung des Hinweises auf die Patenterteilung: **23.04.2003**
(21) Anmeldenummer: 98916977.6
(22) Anmeldetag: 17.03.1998
(51) Int. Cl.: B60N 2/22

(54) **Kraftfahrzeugrückenlehne mit einer Verstelleinrichtung zum Verschwenken des Rückenlehnenkopfes**
Seat back rest for a motor vehicle with an adjustment device to rotate the head of the back rest
Dossier de siège de véhicule automobile à système de réglage pour le pivotement de la tête du dossier

(30) Priorität: 24.06.1997 DE 19726800
(43) Veröffentlichungstag der Anmeldung: 02.06.1999
(73) Patentinhaber: Faurecia Autositze GmbH & Co. KG, 31655 Stadthagen (DE)
(72) Erfinder: HANAUSKE, Reinhard, D-31675 Bückeburg (DE); HELFERS, Cord, D-80992 München (DE); KLINDWORTH, Jan, D-80583 München (DE)
(74) Vertreter: Thielking, Bodo, Dipl.-Ing.
(86) Internationale Anmeldenummer: EP9801540
(87) Internationale Veröffentlichungsnummer: WO98058815

(56) Entgegenhaltungen:
- EP-A- 0 353 210
- EP-A- 0 594 527
- DE-A- 4 128 160
- DE-A- 19 512 012
- US-A- 4 291 916
- US-A- 4 641 884

## Beschreibung

Die Erfindung betrifft eine Kraftfahrzeugrückenlehne nach dem Oberbegriff des Patentanspruchs 1.

Bei einer bekannten Kraftfahrzeugrückenlehne dieser Art (US 4,641,884) ist die Drehverstellung ausschließlich von Hand betätigbar. Ein elektrischer Antrieb ist nicht vorgesehen.

Bei einer anderen bekannten Kraftfahrzeugrückenlehne (DE 41 28 160 A1) erfolgt die Verstellung über ein Spindelgetriebe, das eine am Rückenlehnenkopf angelenkte Gewindespindel aufweist, welche motorisch angetrieben drehbar im Lehnenunterteil gelagert ist.

Bei einer weiteren bekannten. Kraftfahrzeugrückenlehne (DE-A-195 12 012) sind zwei Antriebe vorhanden, wobei der Antrieb zur Höhenverstellung im unteren Lehnenteil untergebracht ist, während der entweder manuell oder motorish betätigbare Antrieb für die Schwenkverstellung der um eine horizontale Drehachse verdrehbaren Drehverstelleinrichtung sich im oberen Lehnenteil befindet.

Ausgehend von o.g. Stand der Technik US 4,641,884 liegt der Erfindung die Aufgabe zugrunde, eine Kraftfahrzeugrückenlehne der als bekannt vorausgesetzten Art so auszubilden, daß eine motorische Verstellung mit einer einfach und vergleichsweise leicht ausgebildeten Verstelleinrichtung möglich ist, und wobei gleichzeitig die Sicherheit für eine ausreichende Festigkeit der Konstruktion gegeben ist.

Die Lösung dieser Aufgabe erfolgt mit den Merkmalen des Kennzeichnungsteils von Anspruch 1.

Die erfindungsgemäße Ausbildung erlaubt eine motorische Verstellung mit einfachen Betätigungselementen, die einfach und leicht auszubilden sind und gleichzeitig die Gewähr für eine feste und zuverlässige Konstruktion darstellen.

Bevorzugte Ausführungsformen der Erfindung sind in den Unteransprüchen beschrieben.

Nachstehend werden verschiedene bevorzugte Ausführungsformen anhand der Zeichnung im einzelnen beschrieben. Die Zeichnungen zeigen insgesamt fünf unterschiedliche Ausführungsformen. In den Zeichnungen sind gleiche oder einander entsprechende Teile jeweils mit den gleichen Bezugszeichen versehen. Sie unterscheiden sich im Bedarfsfall lediglich durch Hochstriche voneinander.

Es zeigen:
- Figur 1a -: eine schematische Seitenansicht von links auf eine erste Ausführungsform der Rückenlehne in ihrer Ausgangsposition,
- Figur 1b -: eine zu Figur 1a analoge Darstellung der ersten Ausführungsform mit nach vorne verschwenktem Rückenlehnenkopf,
- Figur 2a -: eine zu Figur 1a analoge Darstellung einer zweiten Ausführungsform,
- Figur 2b -: eine zu Figur 1b analoge Darstellung der zweiten Ausführungsform,
- Figur 3a -: eine zu Figur 1a analoge Darstellung einer dritten Ausführungsform,
- Figur 3b -: eine zu Figur 1b analoge Darstellung der dritten Ausführungsform,
- Figur 4a -: eine zu Figur 1a analoge Darstellung einer vierten Ausführungsform,
- Figur 4b -: eine zu Figur 1b analoge Darstellung der vierten Ausführungsform,
- Figur 5a -: eine zu Figur 1a analoge Darstellung einer fünften Ausführungsform,
- Figur 5b -: eine zu Figur 1b analoge Darstellung der fünften Ausführungsform.

Die Kraftfahrzeugrückenlehne ist insgesamt mit 1 bezeichnet. Sie weist einen oberen Bereich auf, der als Rückenlehnenkopf 1a bezeichnet ist und einen unteren Bereich, der als Rückenlehnenunterteil 1b bezeichnet ist. Die gesamte Rückenlehne 1 ist um die horizontale Schwenkachse 3 verschwenkbar. Die Rückenlehne 1 besitzt einen Stahlrahmen 5, an den ein Stahlrahmen 6, der den tragenden Bereich des Lehnenkopfes bildet, angelenkt ist.

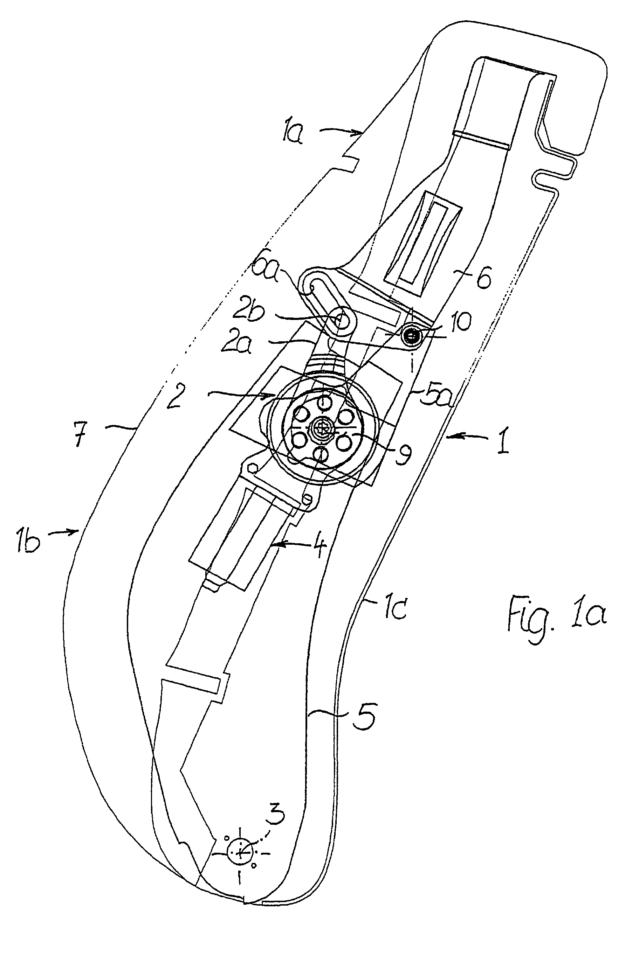

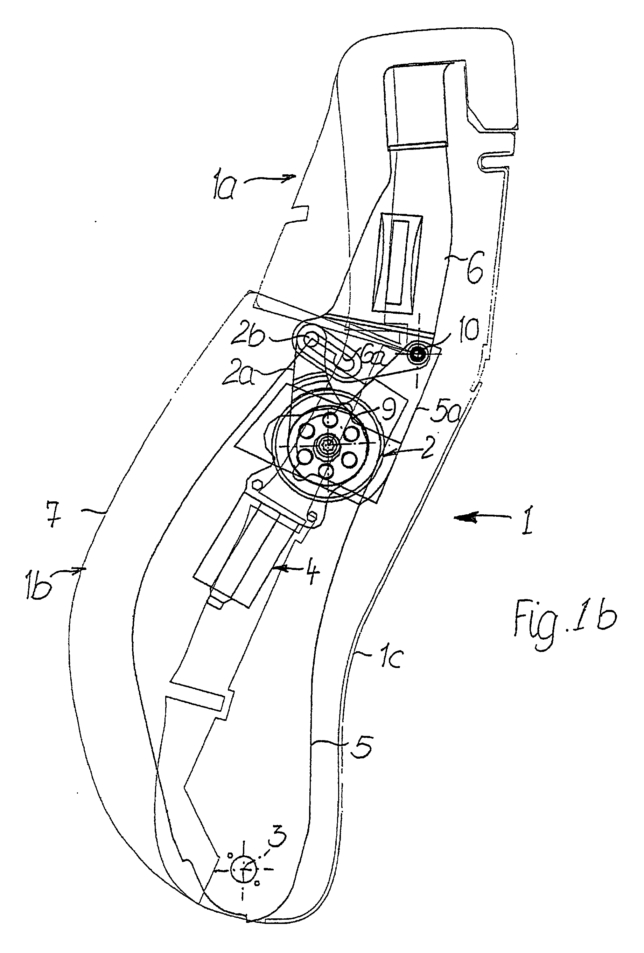

Mit 7 ist die Frontkontur der Seitenwangenpolsterung bezeichnet. Auf der Rückseite besitzt die Rückenlehne eine Rückenlehnenschale 1c, die, wie dies in Figur 1b dargestellt ist, geteilt ausgebildet sein kann.

Das Bezugszeichen 8 bezeichnet die Frontkontur des Polsterschaumteils in der Sitzmitte.

Bei allen dargestellten Ausführungsformen ist eine Neigungsverstelleinrichtung vorgesehen, die als Umlaufgetriebe ausgebildet ist, und bei der ein Teil mit dem Rückenlehnenrahmen 5 verbunden ist, während das andere Teil unmittelbar oder mittelbar mit dem Rahmen 6 des Rückenlehnenkopfes 1a verbunden ist.

Die als Umlaufgetriebe ausgebildete Drehverstelleinrichtung wird motorisch über einen Getriebemotor angetrieben.

### Zunächst zu Figuren 1a und 1b:

Die horizontale Drehachse 9 der Drehverstelleinrichtung 2 befindet sich in einem Abstand von der Verschwenkachse 10, über die der Rückenlehnenkopf 1a mit dem Rückenlehnenunterteil 1b verbunden ist. Die Drehachse 9 und die Verschwenkachse 10 verlaufen parallel zueinander.

Die Drehverstelleinrichtung 2 wird über eine Motor-Getriebe-Einheit 4 angetrieben. Die Motor-Getriebe-Einheit 4 und der damit in Verbindung stehende Bereich der Drehverstelleinrichtung 2 sind fest mit dem Rahmen 5 des Rückenlehnenunterteils 1b verbunden. Der Abtriebsteil der Drehverstelleinrichtung 2 ist mit dem Rahmen 6 des Rückenlehnenkopfes verbunden. Auf der der dargestellten Seite gegenüberliegenden rechten Seite der Rückenlehne ist in gleicher Weise eine Drehverstelleinrichtung 2 vorgesehen, deren einer, feststehender Bereich mit dem Rahmenteil 5 verbunden ist, während das Abtriebsteil mit dem Rahmen 6 des Rückenlehnenkopfes 1a über einen Arm 2a und einen Zapfen 2b verbunden ist. Der Zapfen 2b greift in einen Langlochbereich 6a ein, der fest am Rahmenteil 6 vorgesehen ist. Die Drehverstelleinrichtung 2 sitzt auf einem Tragblech 5a, das fest am Rükkenlehnenrahmenteil angeordnet ist.

Die beiden Abtriebsbereiche der auf unterschiedlichen Seiten angeordneten Drehverstelleinrichtungen 2 sind durch eine gemeinsame, die Rückenlehne horizontal und quer durchsetzende Stange drehfest miteinander verbunden.

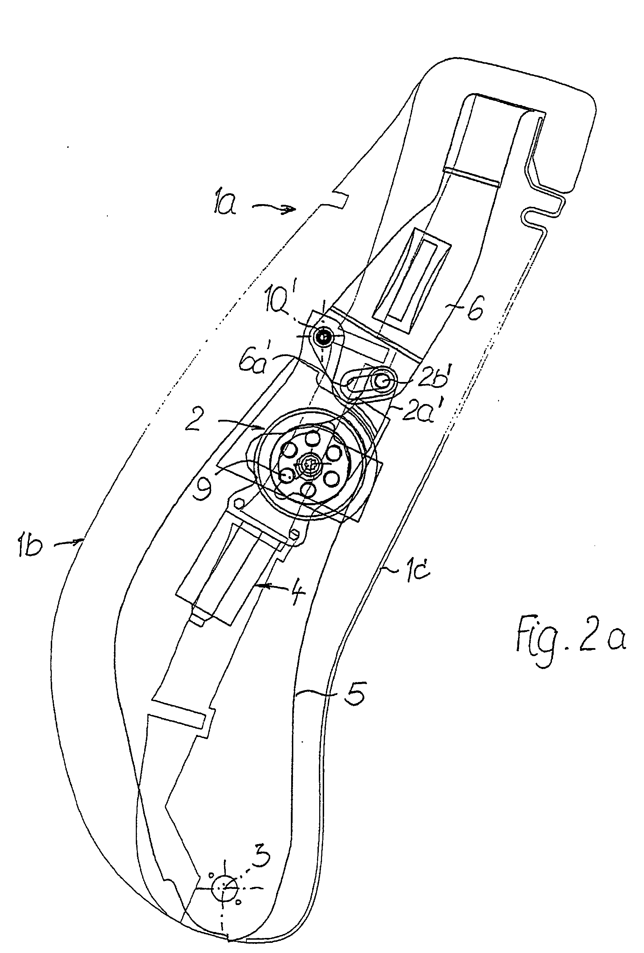

Der Aufbau der Ausführungsform gemäß Figuren 2a und 2b entspricht im wesentlichen dem Aufbau der Ausführungsform gemäß Figuren 1a und 1b. Unterschiedlich sind gegenüber der vorgenannten Ausführungsform nur die Anordnung der Verschwenkachse 10', nämlich an der Frontseite des Rückenlehnenkopfes und der Langlochführung, die an der Rückseite des Rückenlehnenkopfes vorgesehen ist und aus dem Langloch 6a' und dem Zapfen 2b' am Arm 2a' besteht.

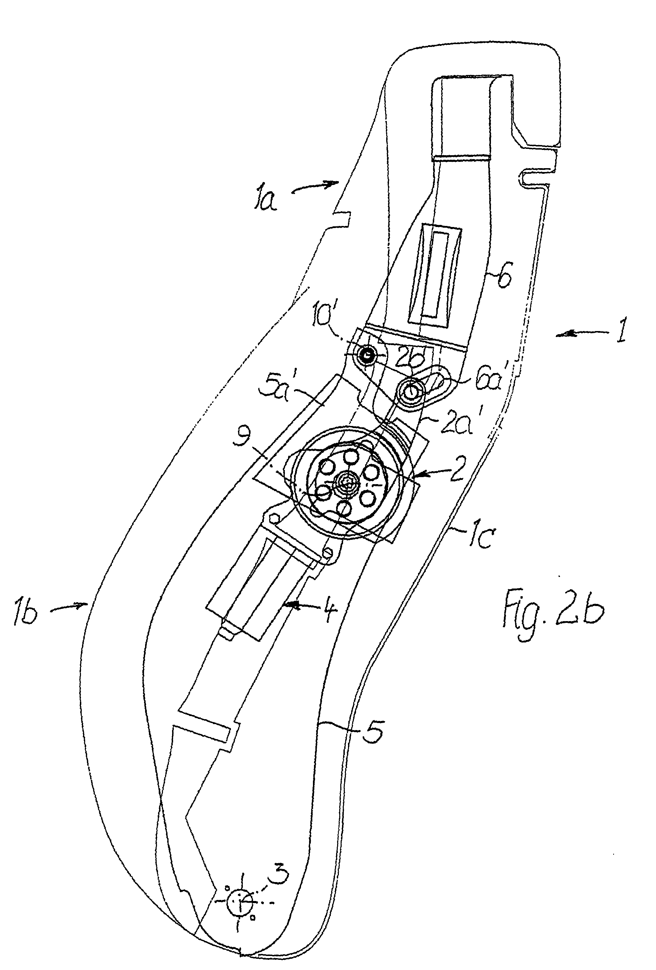

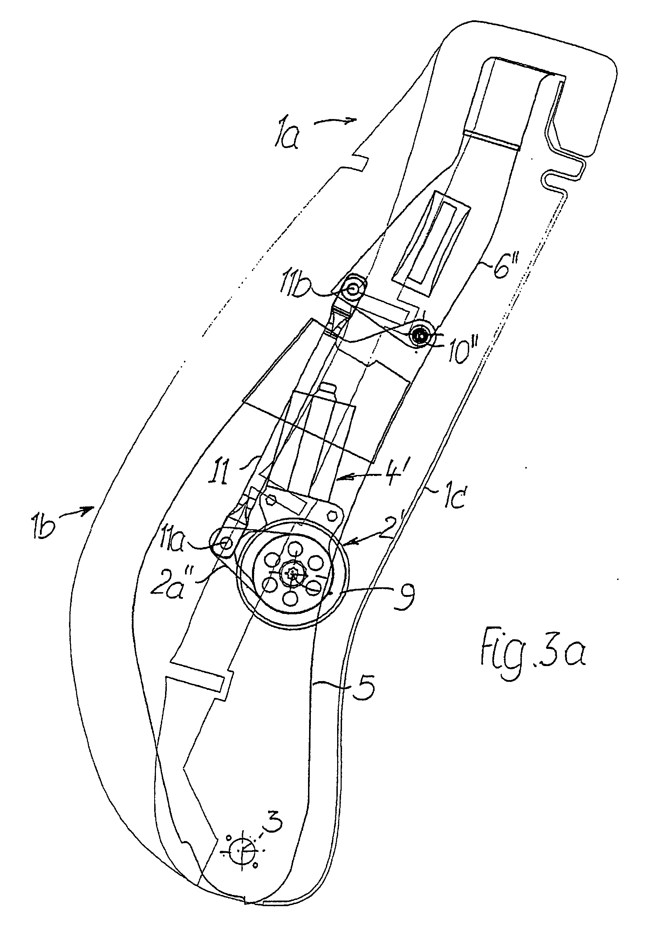

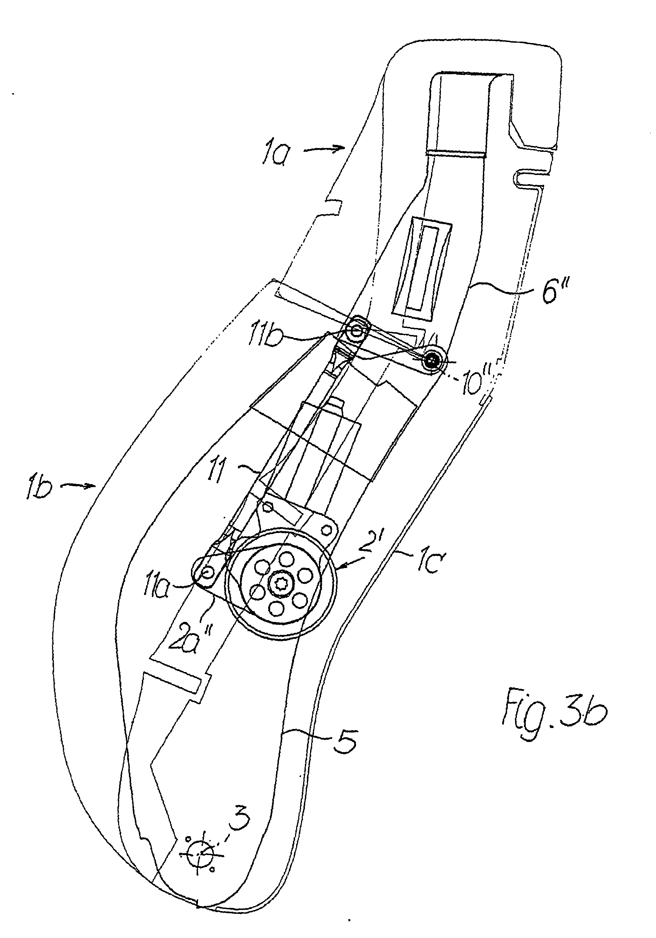

Figuren 3a und 3b zeigen eine weitere Ausführungsform, bei der ein Arm 2a" des Abtriebsteils der Drehverstelleinrichtung 2' gelenkig mit einer Betätigungsstange 11 verbunden ist. Die Betätigungsstange 11 ist bei 11a am Arm 2a" angelenkt und bei 11b am Rahmenteil 6". Die gelenkige Verbindung zwischen dem Rahmenteil 6" und dem Rahmenteil 5 wird durch eine benachbart zur Rückseite der Lehne angeordnete horizontale Achse 10" gebildet.

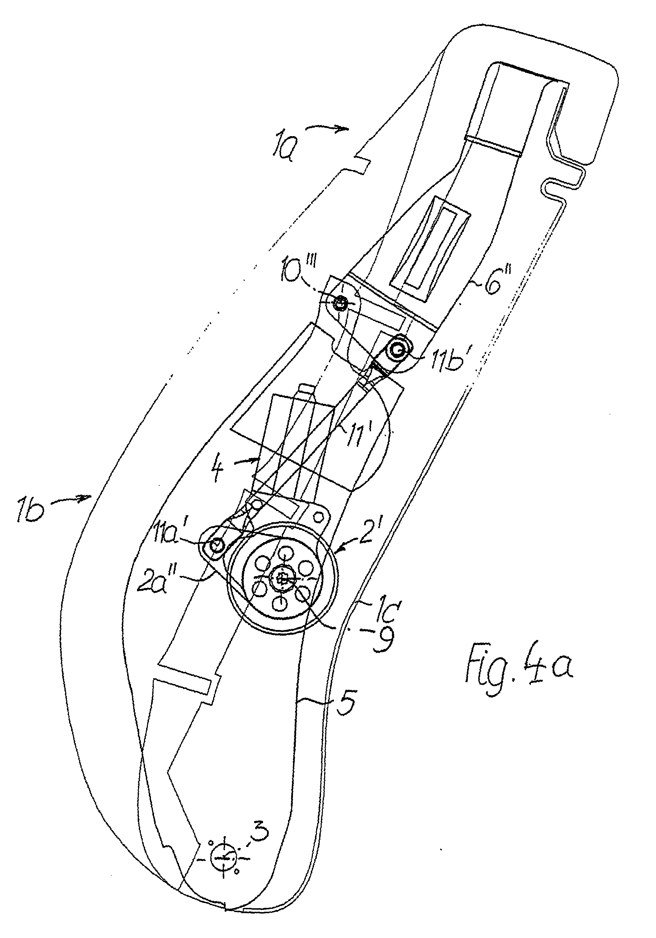

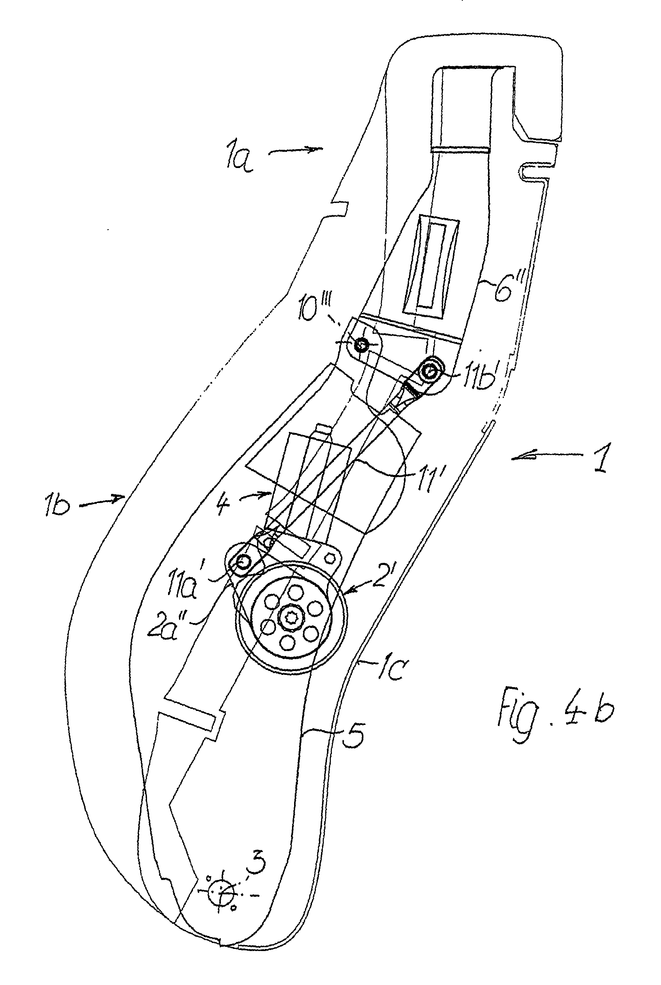

Die Auführungsform gemäß Figuren 4a und 4b unterscheidet sich von der Ausführungsform gemäß Figuren 3a und 3b lediglich durch eine Vertauschung einerseits der Verschwenkachse und andererseits der Anlenkstelle der Betätigungsstange am Rahmenbereich.

Die Betätigungsstange 11' ist mit ihrem unteren Ende bei 11a' in gleicher Weise am Arm 2a" angelenkt, jedoch mit ihrem oberen Ende bei 11b' am hinteren Ende des Rahmenteils 6". Die Verschwenkachse 10" befindet sich bei dieser Ausführungsform an der Frontseite der Rückenlehne 1.

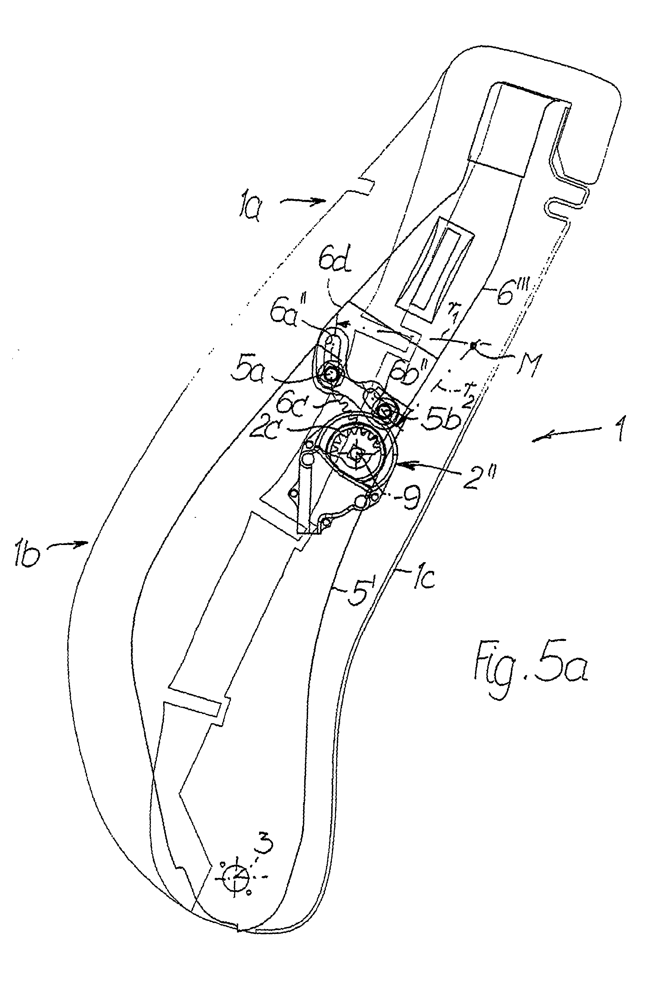

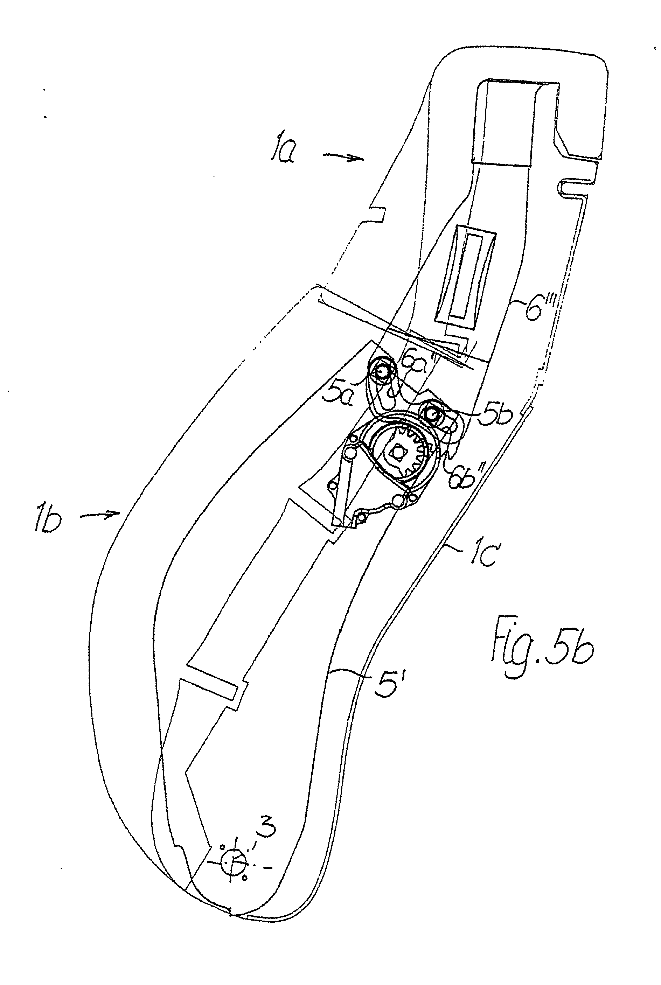

Figuren 5a und 5b zeigen eine weitere Ausführungsform, die ebenfalls über eine nicht dargestellte Motor-Getriebe-Einheit verstellbar ist. Diese Drehverstelleinrichtung 2" ist beispielsweise ein bekanntes Taumelgetriebe, welches als Abtriebselement ein Abtriebsritzel 2c aufweist. Das Abtriebsritzel 2c kämmt mit einem gebogenen, am Bereich 6d des Rahmenteils 6"' festen Zahnsegment 6c.

Am Rückenlehnenrahmenteil 5' sind zwei Bolzen 5a und 5b vorgesehen, welche in gebogene Langlöcher 6a" und 6b" eingreifen. Die Langlöcher 6a" sind an mit dem Rückenlehnenrahmen 6"' festen Bereich des Rückenlehnenkopfes 1a vorgesehen. Die Langlöcher 6a" und 6b" sind gebogen. Ihr Krümmungsmittelpunkt M fällt zusammen mit dem Krümmungsmittelpunkt des Zahnsegments 6c. Der Rückenlehnenkopf 1a verschwenkt also um die ideelle Achse, die durch den Mittelpunkt M verläuft.

## Patentansprüche

1. Kraftfahrzeugrückenlehne (1) mit einer Drehverstelleinrichtung (2; 2'; 2") zum Verschwenken des Rückenlehnenkopfes (1a) gegenüber einem Rückenlehnenunterteil (1b) um eine horizontale Verschwenkachse (10; 10'; 10"; 10"'), wobei die als Umlaufgetriebe ausgebildete Drehverstelleinrichtung (2; 2'; 2") einerseits an dem Rükkenlehnenunterteil befestigt und andererseits über einen um die Drehachse (9) dieser Drehverstelleinrichtung (2; 2'; 2'') verschwenkbaren Betätigungsbereich (2a; 2a'; 2a"; 11; 11') mit dem Rückenlehnenkopf (1a) verbunden ist,
**dadurch gekennzeichnet,**
**daß** die Drehverstelleinrichtung (2; 2'; 2") motorisch antreibbar ist, und daß die Verschwenkachse (10; 10'; 10"; 10"') des Rückenlehnenkopfes (1a) an einer von der Drehachse (9) der Drehverstelleinrichtung (2; 2'; 2") abweichenden Stelle angeordnet ist.

2. Kraftfahrzeugrückenlehne nach Anspruch 1,
**dadurch gekennzeichnet,**
**daß** die Verschwenkachse (10) benachbart zur Frontseite des Rückenlehnenkopfes (1a) angeordnet ist.

3. Kraftfahrzeugrückenlehne nach Anspruch 1,
**dadurch gekennzeichnet,**
**daß** die Verschwenkachse (10) benachbart zur Rückseite des Rückenlehnenkopfes (1a) angeordnet ist.

4. Kraftfahrzeugrückenlehne nach einem der Ansprüche 1 bis 3,
**dadurch gekennzeichnet,**
**daß** der Betätigungsbereich ein fest mit dem Abtriebsbereich der Drehverstelleinrichtung (2') verbundener Arm (2a; 2a') ist, der mit seinem freien Ende über eine Langlochführung (6a, 2b; 6a', 2b') mit dem Rückenlehnenkopf (1a) verbunden ist.

5. Kraftfahrzeugrückenlehne nach Anspruch 4,
**dadurch gekennzeichnet,**
**daß** der Arm (2a; 2a') einen Zapfen (2b; 2b') aufweist, der in einen am Rückenlehnenkopf (1a) befindlichen Langlochbereich (6a; 6a') eingreift.

6. Kraftfahrzeugrückenlehne nach einem der Ansprüche 1 bis 5,
**dadurch gekennzeichnet,**
**daß** der Betätigungsbereich eine Betätigungsstange (11) ist, die einerseits am Abtriebsbereich (2a") der Drehverstelleinrichtung (2') und andererseits am Rückenlehnenkopf (1a) angelenkt ist.

7. Kraftfahrzeugrückenlehne nach einem der Ansprüche 1 bis 6,
**dadurch gekennzeichnet**,
am Rückenlehnenkopf (1a) ein bogenförmiges Zahnsegment (6c) vorgesehen ist, dessen Mittelpunkt (M) zusammenfällt mit dem Mittelpunkt (M) zweier gebogener Langlochführungen (5a, 6a"; 5b, 6b"), über die der Rückenlehnenkopf (1a) mit dem Rückenlehnenunterteil (1b) verbunden ist, wobei das Zahnsegment (6c) im Eingriff steht mit einem Abtriebsritzel (2c) der Drehverstelleinrichtung (2").

8. Kraftfahrzeugrückenlehne nach Anspruch 7,
**dadurch gekennzeichnet,**
**daß** die Langlochführungen (5a, 6a"; 5b, 6b") zwei gebogene und voneinander beabstandete Langlöcher (6a"; 6b") aufweisen, die an einem senkrechten, in Fahrtrichtung weisenden Schwenkblech (6d) vorgesehen sind, das mit einem seitlichen Abstand vom parallel hierzu verlaufenden Zahnsegment (6c) angeordnet ist, wobei in die gebogenen Langlöcher (6a"; 6b") zwei mit dem Rückenlehnenunterteil (1b) feste Bolzen (5a; 5b) eingreifen.

## Claims

1. Motor vehicle backrest (1) with a rotary adjustment device (2; 2'; 2") for swivelling the upper part of the backrest (1a) about a horizontal swivel axis (10; 10'; 10"; 10''') relative to a lower part (1b) of the backrest wherein the rotary adjustment device (2; 2'; 2") in the form of a planetary gear is on one side fixed to the lower part of the backrest and on the other side is connected to the upper part of the backrest (1a) through an actuating area (2a; 2a'; 2a''; 11; 11') which is capable of swivelling about the rotary axis (9) of this rotary adjustment device (2'; 2'; 2"),
**characterised in that**
the rotary adjustment device (2; 2'; 2") can be driven by a motor, and that the swivel axis (10; 10'; 10";10''') of the upper part of the backrest (1a) is mounted in a position which differs from the rotary axis (9) of the rotary adjustment device (2; 2'; 2'').

2. Motor vehicle backrest according to claim 1,
**characterised in that**
the swivel axis (10) is mounted adjacent the front side of the upper part of the backrest (1a).

3. Motor vehicle backrest according to claim 1,
**characterised in that**
the swivel axis (10) is mounted adjacent the back of the upper part of the backrest (1a).

4. Motor vehicle backrest according to one of claims 1 to 3,
**characterised in that**
the actuating region is an arm (2a; 2a') which is connected fixed to the driven area of the rotary adjustment device (2') and which is connected by its free end through an elongate slot guide (6a, 2b; 6a', 2b') to the upper part of the backrest (1a).

5. Motor vehicle backrest according to claim 4,
**characterised in that**
the arm (2a; 2a') has a pivot stud (2b; 2b') which engages in an elongate slot guide (6a, 6a') located on the upper part of the backrest (1a).

6. Motor vehicle backrest according to one of claims 1 to 5,
**characterised in that**
the actuating area is an actuating rod (11) which is attached on one side to the driven area (2a") of the rotary adjustment device (2') and on the other side to the upper part of the backrest (1a).

7. Motor vehicle backrest according to one of claims 1 to 6,
**characterised in that**
a curved toothed segment (6c) is provided on the upper part of the backrest (1a) and its centre (M) coincides with the centre (M) of two curved elongate slot guides (5a, 6a"; 5b, 6b") through which the upper part of the backrest (1a) is connected to the lower part (1b) of the backrest whereby the toothed segment (6c) engages with a driven pinion (2c) of the rotary adjustment device (2").

8. Motor vehicle backrest according to claim 7,
**characterised in that**
the elongate slot guides (5a, 6a"; 5b, 6b") have two curved elongate slots (6a"; 6b") spaced from each other and provided on an upright swivel plate (6d) which faces in the drive direction and which is mounted at a lateral distance from the parallel toothed segment (6c) whereby two bolts (5a; 5b) fixed to the lower part (1b) of the backrest engage in the curved elongate slots (6a"; 6b").

## Revendications

1. Dossier de siège (1) véhicule automobile avec un dispositif de réglage de pivotement (2 ; 2' ; 2'') pour faire pivoter sur un axe d'orientation horizontal (10 ; 10' ; 10'' ; 10''') la tête de dossier (1a) par rapport à une partie inférieure de dossier (1b), le dispositif de réglage de pivotement (2 ; 2' ; 2''), conçu en tant qu'engrenage épicycloïdal, est, d'une part, fixé à la partie inférieure de dossier et, d'autre part, relié à la tête de dossier (1a) par l'intermédiaire d'une zone d'actionnement (2a ; 2a' ; 2" ; 11 ; 11') pivotant autour de l'axe de rotation (9) dudit dispositif de réglage de pivotement (2 ; 2' ; 2''),
**caractérisé en ce que**
le dispositif de réglage de pivotement (2 ; 2' ; 2'') peut être entraîné par moteur et que l'axe d'orientation (10 ; 10' ; 10'' ; 10''') de la tête de dossier (1a) est disposé à un emplacement qui diverge de l'axe de rotation (9) du dispositif de réglage de pivotement (2 ; 2' ; 2'').

2. Dossier de siège pour véhicule automobile selon la revendication 1,
**caractérisé en ce que**
l'axe d'orientation (10) est disposé dans le voisinage de la partie frontale de la tête de dossier (1a).

3. Dossier de siège pour véhicule automobile selon la revendication 1,
**caractérisé en ce que**
l'axe d'orientation (10) est disposé dans le voisinage de la partie postérieure du dos de la tête de dossier (1a).

4. Dossier de siège pour véhicule automobile selon l'une des revendications 1 à 3,
**caractérisé en ce que**
la zone d'actionnement est équipée d'un bras (2a ; 2a') qui, relié fixement à la zone de sortie du dispositif de réglage de pivotement (2'), est rattaché, par son extrémité libre, à la tête de dossier (1a), par l'intermédiaire d'un guidage à trou oblong (6a, 2b ; 6a', 2b').

5. Dossier de siège pour véhicule automobile selon la revendication 4,
**caractérisé en ce que**
le bras (2a ; 2a') présente un tourillon 2b ; 2b') qui entre en prise avec une zone en trou oblong (6a ; 6a') qui est prévue sur la tête de dossier (1a).

6. Dossier de siège pour véhicule automobile selon l'une des revendications 1 à 5,
**caractérisé en ce que**
la zone d'actionnement est une barre d'actionnement (11) qui est articulée, d'une part, sur le secteur de sortie (2a'') du dispositif de réglage de pivotement (2') et, d'autre part, sur la tête de dossier (1a).

7. Dossier de siège pour véhicule automobile selon l'une des revendications 1 à 6,
**caractérisé en ce que**,
sur la tête de dossier (1a), un segment denté, arqué (6c) est prévu, dont le point central (M) coïncide avec le point central (M) de deux guidages à trou oblong arqués (5a, 6a'' ; 5b, 6b''), par l'intermédiaire desquels la tête de dossier (1a) est reliée à la partie inférieure du dossier (1a), le segment denté (6c) étant en prise avec un pignon de sortie (2c) du dispositif de réglage de pivotement (2'').

8. Dossier de siège pour véhicule automobile selon la revendication 7,
**caractérisé en ce que**
les guidages à trou oblong (5a, 6a'' ; 5b, 6b'') présentent deux trous oblongs (6a''; 6b'') arqués et situés à distance l'un de l'autre, lesquels sont prévus sur une tôle pivotante (6d) qui, dirigée dans le sens de marche, est disposée latéralement à distance du segment denté (6c) qui s'étend parallèlement à elle, deux goupilles (5a ; 5b), fixées à la partie inférieure (1b) du dossier, s'engageant dans les trous oblongs, arqués (6a''; 6b'').
